# FASCICULE DE BREVET EUROPEEN

(11) **EP 0 855 773 B1**
(45) Date de publication et mention de la délivrance du brevet: **02.05.2002**
(21) Numéro de dépôt: 98400137.0
(22) Date de dépôt: 22.01.1998
(51) Int. Cl.: H02G 3/04, H02G 3/30, H02G 9/06

(54) **Gaine ou conduit pour la mise en place de câbles et analogues dans des ouvrages souterrains**
Rohr oder Leitung zur Installation eines Kabels bei Erdarbeiten
Pipe or conduit for installation of a cable for underground works

(30) Priorité: 24.01.1997 FR 9700795
(43) Date de publication de la demande: 29.07.1998
(73) Titulaire: Segic Ingénierie, 91370 Verrières-le-Buisson (FR)
(72) Inventeur: Hossard,Armand Louis Elie Daniel, 77090 Collegien (FR); Jouanen,Pierre Abel Jules, 92330 Sceaux (FR)
(74) Mandataire: Coester, Jacques Charles

(56) Documents cités:
- EP-A- 0 158 416
- EP-A- 0 435 721
- DE-A- 4 103 708
- FR-A- 2 607 958
- FR-A- 2 636 656
- GB-A- 2 009 523
- GB-A- 2 229 549

## Description

L'utilisation des ouvrages souterrains prééxistants pour le cheminement de fluides divers permet (en particulier dans les agglomérations) d'éviter d'ouvrir des tranchées et d'induire des nuisances de différents ordres (circulation des personnes et des véhicules, revêtements provisoires ...).

La mise en place de câbles ou de canalisations dans de tels ouvrages souterrains, notamment dans des égouts, pose des problèmes complexes. En effet, lorsque des fluides divers (effluents, eaux pluviales) circulent dans ces ouvrages, ils transportent des déchets de différentes natures qui ont tendance à s'accrocher à tout élément saillant de la paroi du conduit.

En outre, les conduits souterrains, notamment les égouts, sont un lieu d'habitat de rongeurs et d'autres animaux qui peuvent détériorer les câbles, ce qui nécessite des protections très particulières.

De plus, les conditions d'environnement et de salubrité qui règnent dans les ouvrages nécessitent de la part des ouvriers qui y interviennent (pose, entretien, vérification ...) de prendre des précautions particulières et d'utiliser des matériels qui rendent leurs interventions malaisées.

La présente invention vise à solutionner les problèmes qui se posent pour la mise en place puis l'entretien de câbles et de canalisations dans les égouts et ouvrages souterrains. Elle permet supplémentairement de disposer des câbles supplémentaires sans nécessiter une réfection complète des installations.

En outre, l'invention par sa mise en oeuvre n'altère pas les qualités des ouvrages souterrains et en particulier les qualités d'écoulement ni les conditions d'entretien et d'exploitation des ouvrages. Ceci lui permet donc également d'être utilisée dans des ouvrages existants.

A cet effet, l'invention crée une nouvelle gaine ou conduit très particulier.

Conformément à l'invention, la gaine ou conduit fabriquée en une seule pièce pour la mise en place de câbles, canalisations et analogues sur une paroi d'ouvrages souterrains est caractérisé en ce qu'il comprend un corps délimitant un fond ou semelle de forme adaptable et complémentaire à celle de la paroi, des logements multiples longitudinaux étant prévus au-dessus de la semelle sur toute l'étendue de la gaine qui est fermée et présente à ses extrémités latérales des ailes amincies, la fixation sur la paroi étant assurée par des organes de fixation ponctuels (clous, vis, chevilles ...) ou répartis (résine, colle ...).

Diverses autres caractéristiques de l'invention ressortent d'ailleurs de la description détaillée qui suit.

Des formes de réalisation de l'objet de l'invention sont. représentées, à titre d'exemples non limitatifs, aux dessins annexés.

Les fig. 1a à 1c sont des coupes transversales en élévation de gaines selon l'invention, à fixations intérieures et extérieures ponctuelles ou à fixation repartie.

La fig. 2 est une coupe transversale, analogue à la fig. 1, d'une variante, à fixations intérieures ponctuelles ou à fixation répartie.

La fig. 3 est une coupe transversale analogue aux figures précédentes d'une autre variante.

La fig. 4 est une coupe transversale d'un conduit souterrain équipé de gaines des figures précédentes.

La fig. 5 est une perspective en partie schématique et en coupe du conduit de la fig. 4 dans une partie de laquelle la gaine est amenée à passer d'un côté à l'autre de la paroi.

La fig. 6 est une coupe éclatée schématique d'un dispositif de fixation ponctuel (clou de fixation à cheville) pouvant être utilisé pour le montage des gaines des figures précédentes.

Les fig. 7 et 8 sont des coupes transversales d'un autre type de gaine.

La fig. 9 est une coupe transversale d'une gaine particulière destinée à être mise en place dans des conduits inaccessibles (notamment des égouts non visitables).

La fig. 10 est une coupe schématique agrandie du détail A de la fig. 9.

Le dessin montre en 1 la paroi d'un ouvrage, par exemple la paroi d'un égout, le long de laquelle il y a lieu de fixer des câbles. Dans ce but, l'invention crée une gaine fabriquée en une seule pièce et réalisée avantageusement en matière plastique semi-rigide insensible aux agents chimiques présents dans les égouts et insensible à l'action des rongeurs. Il est à cet effet possible d'utiliser par exemple du polychlorure de vinyle (PVC), du polyéthylène haute densité, ou autre.

La gaine comporte un corps 2 délimitant un fond ou semelle 3 qui est semi-rigide pour s'adapter étroitement à la paroi 1. Cette adaptabilité permet une mise en place de la gaine tant dans des ouvrages présentant une courbure d'un diamètre faible que dans des ouvrages à parois planes.

La gaine est réalisée avantageusement par extrusion.

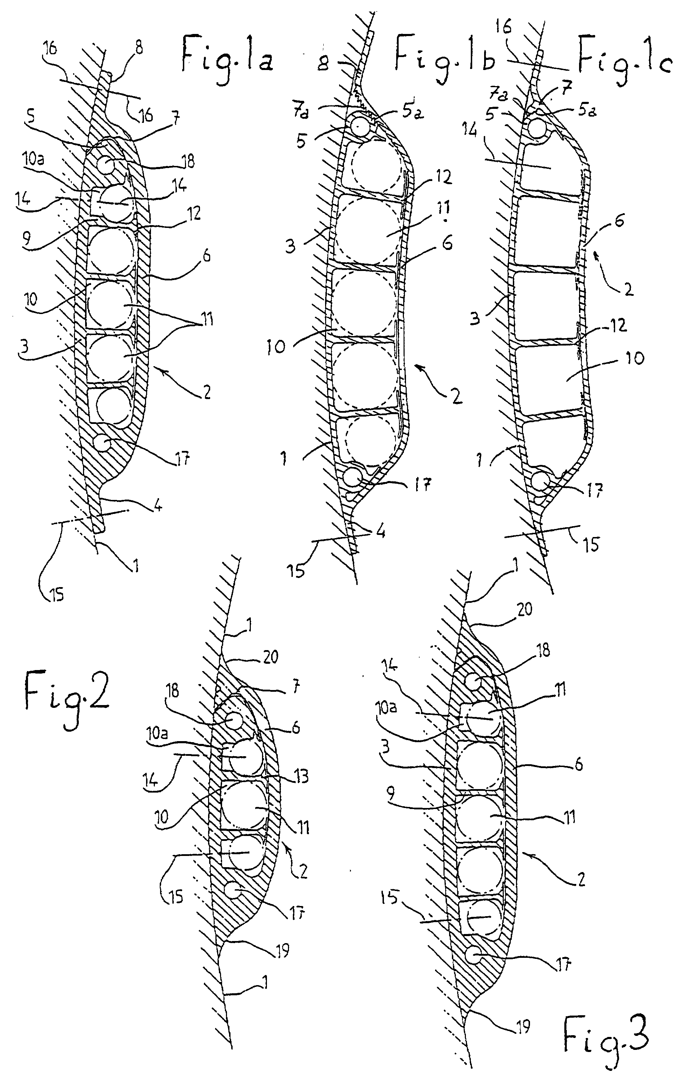

Dans la réalisation de la fig. 1, le fond ou semelle 3 de la gaine délimite, à une extrémité, une patte longitudinale amincie 4 et, à l'autre extrémité, une nervure 5 dont la paroi est bombée comme illustré aux dessins.

La gaine, qui est en une seule pièce, forme un couvercle 6 dont la partie correspondant à la nervure 5 forme une rainure d'emboîtement 7 qui épouse exactement la nervure 5. La partie formant la rainure d'emboîtement 7 est prolongée par une aile longitudinale mince 8 symétrique à la patte 4 décrite ci-dessus, et qui permet de manoeuvrer le couvercle 6 en position de fermeture ou, respectivement, d'ouverture.

Aux Fig. 1b et 1c, la nervure 5 est munie de dents d'accrochage Sa pour coopérer en position de fermeture du couvercle 6 avec des dents correspondantes 7a prévues soit sur une partie de l'aile 8 du couvercle 6 (Fig. 1b) soit sur la rainure d'emboîtement 7 (Fig. 1c).

Au dessin, la gaine présente intérieurement des cloisons 9 délimitant des logements 10 pour des câbles 11. Les cloisons 9 présentent des têtes 12 s'étendant sur une partie de la largeur des logements 10 afin de délimiter des retenues pour les câbles 11 lors de leur mise en place et en cas d'ouverture de la gaine.

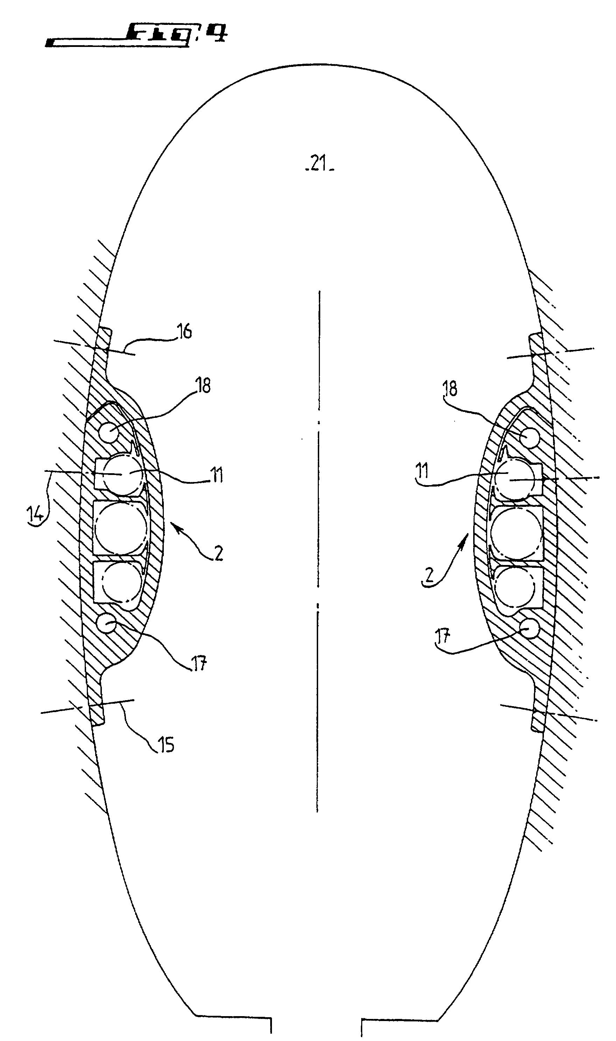

Les gaines peuvent comporter un nombre de logements 10 qui est variable ainsi que l'illustrent en particulier les fig. 1 et 2. De même, pour des câbles particuliers, il est avantageux, dans certains cas, que les cloisons 9 présentent des évidements 13, ce qui est illustré par la fig. 2.

Les gaines sont fabriquées sous forme de segments de longueur pouvant être de l'ordre de quelques mètres ou davantage, ou elles sont fabriquées en très grande longueur et, par exemple, enroulées sur des bobines jusqu'au moment de leur mise en place.

Outre ce qui précède, la gaine présente, au niveau de l'articulation du couvercle et au niveau de la nervure 5, des organes d'alignement tels que des saillies 17 d'un premier tronçon de gaine pouvant s'engager dans des trous 18 d'un autre tronçon de gaine, ou plus simplement chacun des tronçons de gaine peut présenter des trous en 17 et 18 dans lesquels des embouts de jonction ou des broches, peuvent être engagés. Il est ainsi possible d'assurer l'assemblage de deux segments de gaine se suivant, en faisant en sorte que ces deux segments de gaine soient parfaitement alignés.

La gaine peut indifféremment être posée ouverte vers le bas ou vers le haut. Son aspect symétrique et les dispositifs d'alignement permettent un raccordement et une continuité rigoureux.

Pour fixer la gaine sur une paroi 1, le couvercle 6 est ouvert, c'est-à-dire que les logements 10 deviennent accessibles. Une première fixation est assurée par exemple par un clou, une vis à cheville ou autre organe 14, passé à travers le fond de la gaine à partir d'un logement, par exemple le logement 10a.

La fixation s'effectue avant la mise en place éventuelle du câble devant être contenu par le logement 10a.

D'autres fixations sont mises en place notamment en 15, c'est-à-dire à travers la patte longitudinale 4.

Lorsque le ou les câbles sont mis en place, la gaine est fermée en faisant emboîter la nervure 5 par la rainure d'emboîtement 7. Un organe de fixation 16 peut alors être mis en place dans l'aile 8.

Selon le mode de montage, le couvercle 6 peut constituer un élément de retenue lors de l'ouverture de la gaine, par exemple pour y monter un ou plusieurs nouveaux câbles en évitant que ceux déjà en place puissent s'échapper et tomber au sol.

Cependant, les têtes 12 des cloisons 9 constituent des éléments souples de maintien au fur et à mesure de l'engagement des câbles par emboîtement dans les logements 10 de manière à retenir provisoirement les câbles pendant les opérations de pose de ces câbles, et en cas de réouverture de la gaine.

Les gaines sont souvent placées dans des emplacements dans lesquels circulent des liquides chargés d'impuretés et il importe que les gaines ne présentent pas d'aspérités susceptibles de retenir les impuretés et de former des chevelus.

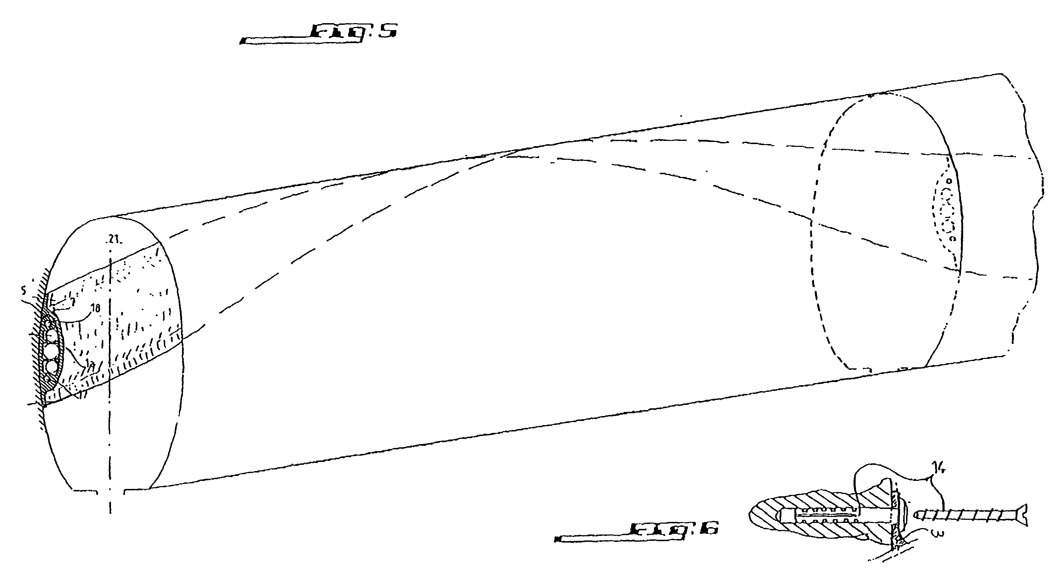

Pour cela, comme l'illustrent les fig. 2 et 3, les deux bords de la gaine forment des bords amincis 19, 20 qui s'appliquent étroitement contre la paroi 1 sans aspérités.

La fixation des tronçons de gaines est effectuée comme décrit préalablement par des organes de fixation 14, 15 mis en place avant fermeture du couvercle 6.

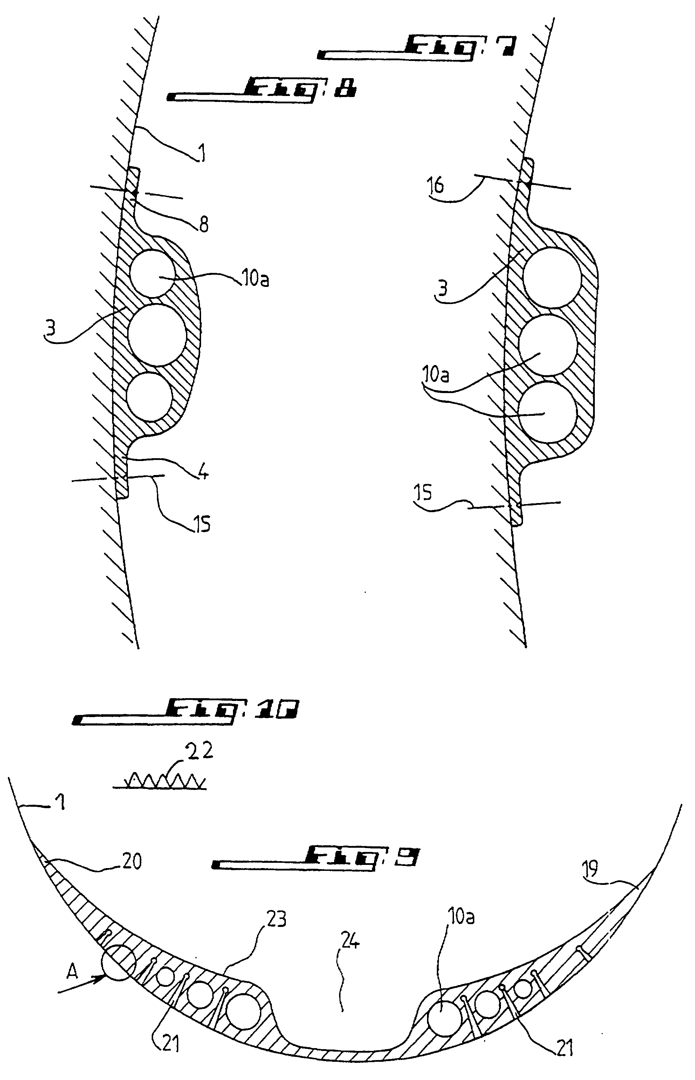

La fig. 4 montre que plusieurs gaines 1 peuvent être mises en place dans les mêmes conduits, par exemple à l'intérieur d'un égout.

Il peut arriver qu'une gaine doive être amenée à passer d'un côté à l'autre d'un conduit d'égout, ce qu'illustre la fig. 5.

Dans ce cas, les deux tronçons de gaines 1a, 1b sont fixés pour s'étendre vers le sommet du conduit d'égout 21 et sont raccordés en réalisant un retournement au moyen des organes d'alignement 17, 18 mis en place comme expliqué dans ce qui précède.

Ce mode de liaison fait que la disposition fonctionnelle prévue est conservée.

Dans ce qui précède, les gaines réalisées en grande longueur ou par tronçons présentent un couvercle mobile mais, dans certains ouvrages, il peut être plus intéressant d'utiliser des gaines non ouvrables.

Les fig. 7 et 8 illustrent des gaines réalisées comme aux figures précédentes mais destinées à être de préférence fabriquées en grande longueur et sans comporter un couvercle, c'est-à-dire que le corps, le fond et la semelle 3 sont formés d'une pièce avec la patte longitudinale 4 et l'aile longitudinale 8 servant à la mise en place des organes de fixation 15, 16.

Pour le passage des câbles, la gaine présente des logements tubulaires 10a et la réalisation est exécutée comme précédemment par extrusion d'une matière plastique appropriée.

Pour la mise en place des câbles, ceux-ci sont introduits par tirage dans les gaines de grande longueur ou en réalisant un portage (à l'air comprimé par exemple), c'est-à-dire en insufflant de l'air comprimé dans les logements 10a dans lesquels les câbles sont passés en les poussant.

Dans certains cas particuliers, dans lesquels il n'est pas possible d'accéder à l'intérieur de conduits, la gaine est constituée comme illustré à la fig. 9, c'est-à-dire de manière analogue à ce qui est décrit en référence aux figures précédentes mais le fond ou semelle 3 de la gaine présente des rainures longitudinales 21 s'étendant entre les logements 10a qui sont prévus dans la partie épaisse de la gaine dont les bords latéraux sont amincis en 19, 20 comme déjà décrit.

Outre ce qui précède, et comme représenté à la Fig. 10, la surface externe de la gaine présente des stries 22 à partir de son fond 3 alors que le côté 23 constituant le dessus de la gaine est réalisé de façon aussi lisse que possible et en délimitant avantageusement une cunette 24 pour l'écoulement des eaux et un autocurage pour de faible débit.

Les rainures 21 permettent à la gaine des modifications de courbure pour qu'elle s'adapte à des ouvrages de forme et diamètre différents.

Par ailleurs, les stries 22 formées dans la paroi de fond rendent possible le collage de la gaine au moyen d'une colle ou d'une résine liquide qui est poussée dans le conduit en même temps que la gaine y est conduite.

Après prise la gaine fait partie intégrante de la paroi du conduit.

Bien que la réalisation selon la Fig. 9 soit plus particulièrement prévue pour une gaine ne comportant pas de couvercle, on ne sortirait pas du cadre de l'invention en prévoyant que les caractéristiques telles que les rainures 21 et les stries 22 soient utilisées dans les gaines présentant un couvercle selon les Fig. 1 à 6. De même, il est possible de réaliser le dessus de la gaine des Fig. 1 à 8 pour que celui-ci délimite une cunette semblable à la cunette 24 de la Fig. 9.

En outre, la gaine est de réalisation suffisamment souple pour pouvoir être posée dans n'importe quelle position et, particulièrement dans le cas des ouvrages souterrains, ceci permet des déviations, voire des changements de côté et d'éviter ainsi des obstacles ponctuels.

L'invention n'est pas limitée aux exemples de réalisation, représentés et décrits en détail, car diverses modifications peuvent y être apportées sans sortir du cadre des revendications.

## Revendications

1. Gaine ou conduit fabriquée en une seule pièce pour la mise en place de câbles et analogues sur une paroi d'ouvrages souterrains, **caractérisée en ce qu'**elle comprend un corps délimitant un fond ou semelle (3) de forme adaptable et complémentaire à celle de la paroi (1), des logements multiples longitudinaux (10, 10a) étant prévus au-dessus de la semelle (3) sur toute l'étendue de la gaine qui est fermée et présente à ses extrémités latérales des ailes amincies (4, 8, 19, 20), la fixation sur la paroi (1) étant assurée par des organes de fixation ponctuels (14, 15, 16),une résine ou une colle.

2. Gaine suivant la revendication 1, **caractérisée par** un couvercle ouvrable (6) d'une pièce avec la gaine pour l'accessibilité aux logements (10).

3. Gaine suivant l'une des revendications 1 ou 2, **caractérisée en ce qu'**elle est fabriquée en une matière plastique semi-rigide et, par exemple, en polyéthylène haute densité ou en PVC.

4. Gaine suivant l'une des revendications 1 à 3, **caractérisée en ce qu'**elle est fabriquée par extrusion.

5. Gaine suivant l'une des revendications 1 à 4, **caractérisée en ce qu'**elle comporte des organes d'alignement (17, 18).

6. Gaine suivant l'une des revendications 1 à 5, **caractérisée en ce que** les logements multiples sont délimités par des cloisons surmontées par des têtes de retenue (12) pour les câbles (11) mis en place dans lesdits logements (10).

7. Gaine suivant l'une des revendications 1 à 6, **caractérisée en ce que** le couvercle ouvrable (6) forme une rainure longitudinale (7) d'emboîtement d'une nervure (5) de ladite gaine.

8. Gaine suivant la revendication 7, **caractérisée en ce que** la rainure longitudinale (7) porte les dents (7a) coopérant, en position de fermeture du couvercle (6), avec des dents (5a) de la nervure (5).

9. Gaine suivant l'une des revendications 1 à 6, **caractérisé en ce que** le couvercle ouvrable 6 forme une aile 8 munie de dents (7a) coopérant, en position de fermeture du couvercle (6), avec des dents (5a) d'une nervure (5) de ladite gaine.

10. Gaine suivant l'une des revendications 1 à 9, **caractérisée en ce que** la partie d'ouverture du couvercle (6) peut être située en partie haute de la cloison pour constituer une retenue lors de la mise en place des câbles (11) dans les logements (10).

11. Gaine suivant l'une des revendications 1 à 10, **caractérisée en ce que** la gaine comporte des rainures longitudinales (21) pour son adaptation à la forme de la paroi qui la porte et est mise éventuellement en place par collage, la gaine pouvant alors présenter des stries (22).

12. Gaine suivant l'une des revendications 1 à 11, **caractérisée en ce qu'**elle délimite une cunette (24).

13. Gaine suivant l'une des revendications 1 à 12, **caractérisée en ce qu'**elle comporte des logements fermés (10a) pour la mise en place de câbles et analogues par tirage ou portage.

## Claims

1. Pipe or conduit made in a single piece for installation of cables and the like on a wall of underground works, **characterized in that** it comprises a body which forms a bottom or sole (3) of a shape which can be adapted and made complementary to that of the wall (1), multiple longitudinal housings (10, 10a) being provided above the sole (3) on all the extent of the pipe which is closed and has side ends provided with thinned wings (4, 8, 19, 20), fixation onto the wall (1) being ensured by localized fixation members (14, 15, 16), a resin or a glue.

2. Pipe according to claim 1, **characterized by** an openable cover (6) integral with the pipe for giving access to the housings (10).

3. Pipe according to one of claims 1 or 2, **characterized in that** it is made of a semi-rigid plastic material and, for example, high density polyethylene or PVC.

4. Pipe according to one of claims 1 to 3, **characterized in that** it is made by extrusion.

5. Pipe according to one of claims 1 to 4, **characterized in that** it comprises lining members (17, 18).

6. Pipe according to one of claims 1 to 5, **characterized in that** the multiple housings are delimited by partition walls that are surmounted by retaining heads (12) for cables (11) positioned in said housings (10).

7. Pipe according to one of claims 1 to 6, **characterized in that** the openable cover (6) forms a longitudinal groove (7) for encasing a rib (5) of said pipe.

8. Pipe according to claim 7, **characterized in that** the longitudinal groove (7) supports a set of teeth (7a) co-operating, in a closing position of the cover (6), with a set of teeth (5a) of the rib (5).

9. Pipe according to one of the claims 1 to 6, **characterized in that** the openable cover (6) forms a wing (8) provided with a set of teeth (7a) co-operating, in a closing position of the cover (6), with a set of teeth (5a) of a rib (5) of said pipe.

10. Pipe according to one of claims 1 to 9, **characterized in that** the opening part of the cover (6) may be located at a high part of the partition wall for making a retention upon positioning the cables (11) in the housings (10).

11. Pipe according to one of claims 1 to 10, **characterized in that** the pipe has longitudinal grooves (21) for adapting it to the shape of the wall which carries it and is possibly positioned by gluing, the pipe being possibly provided with serrations (22).

12. Pipe according to one of claims 1 to 11, **characterized in that** it defines a draining gutter (24).

13. Pipe according to one of claims 1 to 12, **characterized in that** it comprises closed housings (10a) for positioning cables or similar by drawing or portering.

## Patentansprüche

1. Einteiliges Rohr oder Leitung zur Installation von Kabeln und dergleichen an einer Wand unterirdischer Bauwerke, **dadurch gekennzeichnet, dass** es einen Körper aufweist, der einen Boden oder Sohle (3) mit einer anpassbaren und mit der mit der Wand (1) komplementären Form begrenzt, dass eine Vielzahl von länglichen Aufnahmen (10, 10a) über der Sohle (3) auf der gesamten Erstreckung des Rohrs vorgesehen ist, das geschlossen ist und an seinen seitlichen Enden verjüngte Flügel (4, 8, 19, 20) aufweist, wobei die Befestigung an der Wand (1) mittels punktuellen Befestigungsorganen (14, 15, 16), mit Harz oder mit Klebstoff bewerkstelligt wird.

2. Rohr gemäss Anspruch 1, **gekennzeichnet durch** einen einteilig mit dem Rohr hergestellten Deckel (6), der geöffnet werden kann, im Hinblick auf die Zugänglichkeit zu den Aufnahmen (10).

3. Rohr gemäss einem der Ansprüche 1 oder 2, **dadurch gekennzeichnet, dass** es aus halbstarrem Kunststoff hergestellt ist und, zum Beispiel, aus sehr dichtem Polyethylen oder PVC.

4. Rohr gemäss einem der Ansprüche 1 bis 3, **dadurch gekennzeichnet, dass** es durch Extrusion hergestellt wird.

5. Rohr gemäss einem der Ansprüche 1 bis 4, **dadurch gekennzeichnet, dass** es Ausrichtungsmittel (17, 18) aufweist.

6. Rohr gemäss einem der Ansprüche 1 bis 5, **dadurch gekennzeichnet, dass** die Vielzahl an Aufnahmen von Trennwänden begrenzt ist, über denen sich Halteköpfe (12) für die in den besagten Aufnahmen installierten Kabel (11) befinden.

7. Rohr gemäss einem der Ansprüche 1 bis 6, **dadurch gekennzeichnet, dass** der Deckel (6), der geöffnet werden kann, eine Längsnute (7) für das Eingreifen eines Stegs (5) des besagten Rohrs bildet.

8. Rohr gemäss Anspruch 7, **dadurch gekennzeichnet, dass** die Längsnute (7) Zähne (7a) aufweist, die in der Verschlusstellung des Deckels (6), mit den Zähnen (5a) des Stegs (5) zusammenarbeiten.

9. Rohr gemäss einem der Ansprüche 1 bis 6, **dadurch gekennzeichnet, dass** der Deckel (6), der geöffnet werden kann, einen mit Zähnen (7a) versehenen Flügel (8) bildet, der in der Verschlusstellung des Deckels (6) mit den Zähnen (5a) eines Stegs (5) des besagten Rohrs zusammenarbeitet.

10. Rohr gemäss einem der Ansprüche 1 bis 9, **dadurch gekennzeichnet, dass** der Öffnungsteil des Deckels (6) sich im oberen Teil der Zwischenwand befinden kann, um einen Rückhalt bei der Installation der Kabel (11) in die Aufnahmen (10) zu bilden.

11. Rohr gemäss einem der Ansprüche 1 bis 10, **dadurch gekennzeichnet, dass** das Rohr Längsnuten (21) im Hinblick auf seine Anpassung an die Form der es tragenden Wand aufweist, und eventuell durch Verkleben installiert wird, wozu das Rohr dann Rillen (22) aufweisen kann.

12. Rohr gemäss einem der Ansprüche 1 bis 11, **dadurch gekennzeichnet, dass** es eine Muldenrinne (24) begrenzt.

13. Rohr gemäss einem der Ansprüche 1 bis 12, **dadurch gekennzeichnet, dass** es geschlossene Aufnahmen (10a) für die Installation von Kabel und dergleichen mittels Ziehen oder Tragen aufweist.
